(19)

Europäisches
Patentamt
European
Patent Office
Office européen
des brevets

(11) **EP 2 093 919 B1**

(12) **EUROPEAN PATENT SPECIFICATION**

(45) Date of publication and mention
of the grant of the patent:
**25.01.2012 Bulletin 2012/04**

(51) Int Cl.:
*H04L 5/00* *(2006.01)*     *H04L 5/02* *(2006.01)*
*H04L 25/02* *(2006.01)*     *H04L 27/26* *(2006.01)*
*H04L 1/00* *(2006.01)*

(21) Application number: **08290174.5**

(22) Date of filing: **25.02.2008**

(54) **Frame allocation structure decision and method thereof**

Entscheidung von Rahmenzuweisungsstruktur und Verfahren dafür

Décision d'affectation de structure de trame et procédé correspondant

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**26.08.2009 Bulletin 2009/35**

(73) Proprietor: **Alcatel Lucent
75008 Paris (FR)**

(72) Inventor: **Rüegg, Andreas
70469 Stuttgart (DE)**

(74) Representative: **Schmidt, Werner Karl et al
Alcatel Lucent
Intellectual Property & Standards
70430 Stuttgart (DE)**

(56) References cited:
**EP-A- 1 585 246**     **US-A1- 2007 149 249**

EP 2 093 919 B1

**Description**

**Technical field**

The invention relates to a method of deciding a frame allocation structure type in an OFDM communication system, to a base station and to a computer program product.

**Background and related art**

Orthogonal Frequency-Division Multiplexing (OFDM) is a digital multi-carrier modulation scheme that uses closely-spaced orthogonal sub-carriers to carry data. These sub-carriers typically overlap in frequency, but are designed not to interfere with each other, and may be efficiently separated using a Fast Fourier Transform (FFT) algorithm. Each sub-carrier is modulated with a conventional modulation scheme at a low symbol rate, maintaining data rates similar to conventional single-carrier modulation schemes in the same bandwidth.

The IEEE 802.16 Working Group on Broadband Wireless Access Standards prepares formal specifications for the global deployment of broadband Wireless Metropolitan Area Networks. The standard IEEE 802.16 is also known as WiMax. The 802.16 standard essentially standardizes 2 aspects of the air interface - the physical layer and the Media Access Control layer. In the physical layer, the 802.16 uses scalable OFDM to carry data, supporting channel bandwidths of between 1.25 MHz and 20 MHz, with up to 2048 sub-carriers. OFDM access (OFDMA) allows flexible orthogonal multi-user allocation by assigning different numbers of subcarriers to different users with different modulation and coding. It supports adaptive modulation and coding, so that in conditions of good signal, a highly efficient 64 QAM coding scheme can be used, whereas where the signal is poorer, a more robust BPSK coding mechanism may be used. In intermediate conditions, 16 QAM and QPSK can also be employed. Other features include support for Multiple-input Multiple-output (MIMO) antenna setups in order to increase cell coverage and/or throughput and Hybrid automatic repeat request (HARQ) for good error correction performance.

In an OFDMA system, each user's physical data allocation may be structured in a frequency diverse or in a frequency selective manner. The allocation structure is more efficient if selected according to the conditions of the channel. Therefore, there is a need for a method for deciding a frame allocation structure type, for a base station and for a computer program product.

US 2007/149249 discloses an orthogonal frequency division multiple access system, where pilot signals are distributed pilot sub-carriers and transmitted and measured at each wireless transmit/receive unit and obtain a channel quality metric for each pilot sub-carrier. Each of these units sends feedback to the base station reporting channel quality based on the measured channel quality metrics and the allocation type is selected and adaptively switched according to the channel variations.

**Summary**

The present invention provides a method for deciding a frame allocation structure type in an OFDM digital cellular mobile communication system, the communication system comprising a mobile station coupled to a base station, the method comprising the steps of: receiving a plurality of pilots in at least one frame from a mobile station by the base station; obtaining a first frame part and a second frame part of the frame by the base station; obtaining a notification indicating a current allocation structure type by the base station; calculating a first channel conditions vector by obtaining a first set of averages of the first frame part, and calculating a second channel conditions vector by obtaining a second set of averages of the second frame part, if the notification indicates a first allocation structure type by the base station.

The invention further comprises the steps of: obtaining a first vector of the channel conditions from a first sounding zone of the first part of the frame and obtaining a second vector of the channel conditions from a second sounding zone of the second part of the frame, if the notification indicates a second allocation structure type by the base station; calculating a channel time variation value with an arithmetic operation between the first and second the channel conditions vectors by the base station; switching to the second allocation structure type if the notification indicates the first allocation structure type and the channel time variation is smaller than a first breakpoint, or switching to the first allocation structure type, if the notification indicates the second allocation structure type and the channel time variation is bigger than a second breakpoint by the base station.

The main advantage of the embodiments is that it allows the base station to decide for the best allocation structure according to the time variation of the channel. If the time variation of the channel is small, a second allocation structure may be used, that correspond to frequency selective allocation. For rapidly varying channel conditions, a frequency diverse allocation is more efficient, as it randomly allocates the pilots within a frame. The embodiments describe reliable criteria for deciding when to switch between the allocation structure types.

In an embodiment, the first allocation structure type is adapted for fast channel time variations and the second allocation structure type is adapted for slow channel time variations. The first allocation structure type is PUSC and the second allocation structure type is AMC. The arithmetic operation is a mean of a difference between the first and second vector of the channel conditions. Alternatively, the arithmetic operation is a correlation between the first and second vector of the channel conditions. In an embodiment, the first and second frame parts belong to same frame. The arithmetic operation may also use the calculations of the UMTS, WIMAX or LTE standards, or any other operation that detects the channel time variations.

PUSC stands for partial usage of subchannels and is an 802.16 OFDMA allocation scheme where in uplink; the user burst is divided into so called tiles containing 12 samples (4 subcarriers x 3 OFDM symbols). These tiles are spread pseudo randomly over a big part of the time-frequency area defining the UL frame. AMC stands for adaptive modulation and coding and allows in 802.16 uplink, allocation of data at a specific physical position over one or more contiguous subcarriers and the entire number of OFDM symbols (in time). The sounding zone is a region of one or more OFDMA symbols in the UL frame that is used by the mobile station to transmit sounding signals to enable the base station to reliably determine the channel conditions between the base station and the mobile station.

In a further embodiment, if the notification indicates a second allocation structure type and two parts of the same frame is used, a first average is obtained on a first group of slots at the beginning of the frame and a second average is obtained on a second group of slot at end of the frame. This type of detection allows using a single frame for the calculation of the channel's time variations.

In a further embodiment, the first and second frame parts belong to a first and a second frame. The first and second frame may be randomly allocated frames or contiguous frames. The embodiments may include using two separated frames for the detection of the variation of the channel, and it can be used for channels with small time variations. Preferably, the distance between the frames is constant. A small spacing or contiguous frames are preferred, especially to identify fast varying channels.

In another aspect, the invention relates to a base station in an OFDM digital cellular mobile communication system being operable to perform in accordance with any one of the preceding embodiments. The base station receives the uplink frames or parts of the frames and accomplishes the calculation of the channel conditions and its time variation, and switches between the allocation structures.

In a further aspect, the invention relates to a computer program product stored on a computer usable medium, comprising computer readable program means for causing a computer to perform a method according to any of the preceding embodiments when the program is run on the computer.

## Brief description of the drawings

In the following preferred embodiments of the invention are described in greater detail by way of example only making reference to the drawings in which:

Figure 1    shows an example of a frame allocation structure and system,

Figure 2    shows the metric computation block example in a base station,

Figure 3    shows an example of the calculation of the channel conditions vector,

Figure 4    shows a histogram of channel time variation calculation,

Figure 5    shows a flowchart of a possible embodiment of the invention.

## Detailed description

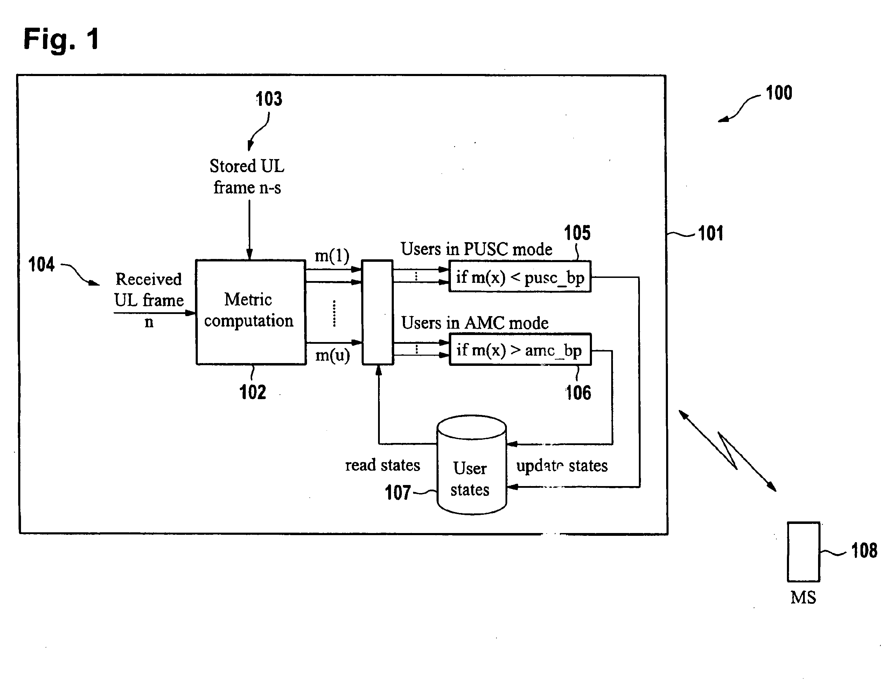

Fig. 1 shows an example of a frame allocation structure decision 100 in a base station 101, the structure 101 comprising a metric computation block 102, a first stored frame 103, a received frame 104, a first break point decision 105, a second break point decision 106, and an identification of the current allocation structure type 107. A mobile station 108 is coupled to the base station 101

When the base station 101 receives a first frame 103 and a second frame 104, it may use the metric computation 102 in order to obtain the channel condition, to calculate the channel time variation and decide the frame allocation structure type that the mobile communication system may use to allocate the pilots and the dat within the following frames. Alternatively, the metric computation may use a single frame to obtain the channel time variation, dividing the frame into two parts and calculate the channel time variation between the two frames or frame parts. The calculation of the channel conditions per user for each frame or for each part of the frame depends on the current allocation structure type each mobile user is using in the mobile communication system. If the allocation structure type corresponds to a PUSC structure or a first allocation structure type, then the metric computation 102 divides the frame or the part of the frame into a set of blocks that vary in size, depending on the number of sub-carriers within the frame, and obtains an average of all pilots of each block and stores it in the form of a vector. The vector of the frame or the part of the frame contains the average of each block within the frame or the part of the frame. The same process is repeated for the second frame or the second part of the frame.

PUSC stands for partial usage of subchannels and is an 802.16 OFDMA allocation scheme where in uplink; the user burst is divided into so called tiles containing 12 samples (4 subcarriers x 3 OFDM symbols). These tiles are spread pseudo randomly over a big part of the time-frequency area defining the UL frame. AMC stands for adaptive modulation and coding and allows in 802.16 uplink, allocation of data at a specific physical position over one or more contiguous subcarriers and the entire number of OFDM symbols (in time).

If the current allocation structure type corresponds to a second type or AMC and two frames are used for the channel time variation calculation, the sounding zone is used. The sounding zone is a region of one or more OFDMA symbols in the UL frame that is used by the mobile station to transmit sounding signals to enable the base station to reliably determine the channel conditions between the base station and the mobile station. The sounding zone for each frame can be seen as a vector of the frame with the channel conditions information or based on it (e.g. through moving average filtering) the channel condition vector can be obtained. In the case of intra-frame detection, the calculation is based on burst pilots instead of the sounding zone. If for example a four slot burst is available, an average of the pilot on the same sub-carriers in a pair of adjacent slots may be obtained. This is achieved on the first two slots and on the last two, resulting on two vectors that contain the channel time conditions information. This process is repeated for all the users from m(1) up to m(u).

The two vectors that contain the channel conditions information are sent, for example, to an evaluation function that analyze the variation between both vectors in order to obtain the channel time variation. In this case, several arithmetic operations may be used. For example a sample-by-sample difference calculates the mean of the absolute value of the difference of the two vectors. Another arithmetic operation may be the correlation of the two vectors or any other evaluation function, as used in UMTS, WiMAX or Long Term Evolution (LTE) standards. The output of the calculation of the channel time variation will contain a single value with information on how fast the channel is varying in time. This information is used to compare with the break point dependent on the current allocation structure type. If the notification of the current allocation indicates a first allocation structure type and the obtained value is smaller than a first break point, the method switches to a second allocation structure type. If on the other hand, the notification indicates a second allocation structure type and the channel time variation value is bigger than a second break point, then the base station switches to a first allocation structure type. Subsequently, the indication of the current allocation structure type will be updated and used in the next calculation of the channel time variation.

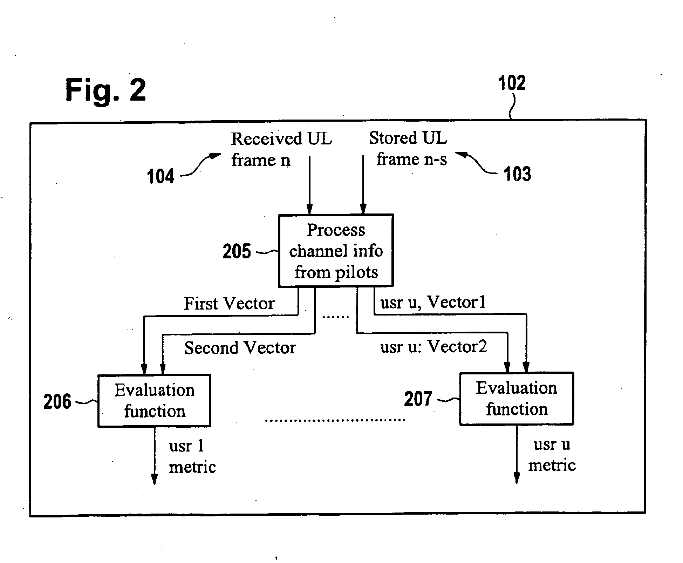

Fig. 2 shows a more detailed block diagram of the metric computation block within the base station 100. The computation block 102 comprises a first stored frame 103, a second received frame 104, the processing of the frames or the part of the frame 205, the evaluation function 206 and the evaluation function 207.

When the base station 100 has received the two frames or the two parts of the frames that contain the channel condition information, it looks up or obtains the notification indicating the current allocation structure type. If the allocation structure corresponds to a first type, as for example PUSC, it divides the frame or the part of the frame into a set of blocks and obtains an average for each block that is stored in a vector. The same process is repeated for the other frame or the other part of the frame. If the current allocation corresponds to a second structure type, that may be for example AMC, the calculation depends on what is being used to obtain the channel condition. If a whole frame is used for the analysis, then the sounding zone is used for directly obtaining the vector with the channel conditions information.

Otherwise, for an intra-frame calculation corresponding to a second structure type, a first average is obtained on a first group of slots at the beginning of the frame and a second average is obtained on a second group of slots at the end of the frame. This process is repeated for all the users from the user 1 up to the user u, and sent to the evaluation functions for each user, as for example the evaluation function 206 for the user 1. The information or the vectors that are sent to the evaluation function that contain the channel conditions may represent the phase or, alternatively, the amplitude of the channel, depending on the processing in 205. The evaluation function may correspond for example to a sample-by-sample difference that corresponds to the sum or the mean of the absolute value of the difference of the vectors that have been received. The second possibility is to obtain the correlation between both vectors. The evaluation functions may also correspond to the functions used in UMTS and LTE and that may correspond to the following arithmetic operation:

Sample-by-sample difference:

$$\text{sum(abs(angle(x)-angle(y)))}$$

(continued)

UMTS:

$$\text{sum((abs(x+y))^2) / sum((abs(x))^2 + (abs(y))^2 )}$$

LTE:

$$\text{sum(x*conj(y)) / sum((abs(x))^2 − noise Estimation)).}$$

The output of the evaluation function contains a value representing the metric of the current channel time variation. This value is compared with the break point that corresponds to the current allocation structure mode. Depending on the current structure, the value will have to be smaller than the break point or bigger than the second break point to allow a switching of the structure type.

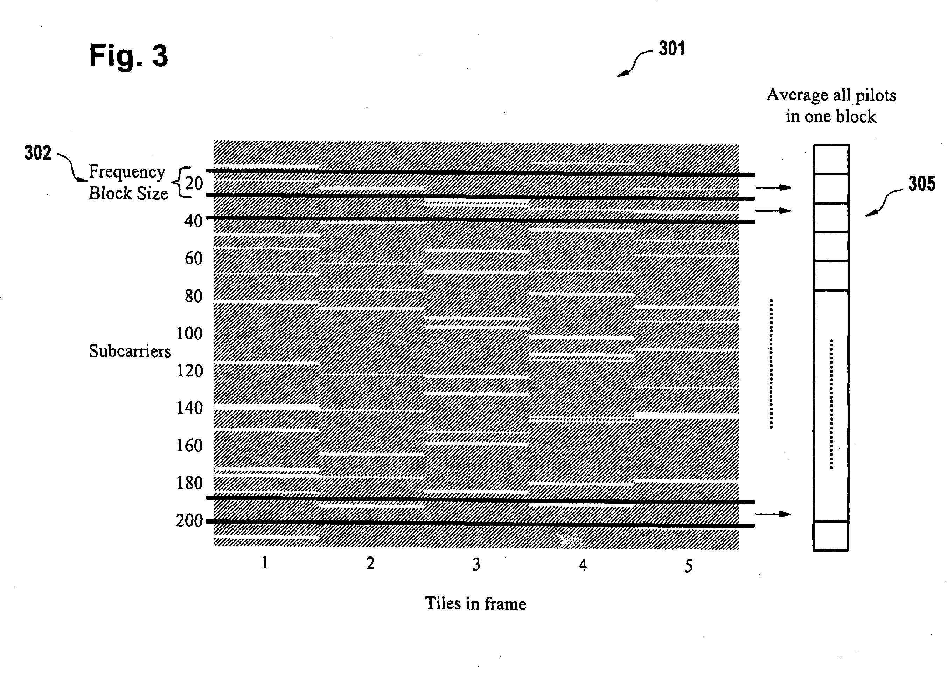

Fig. 3 shows a detailed description of the calculation of the vector that contain the channel conditions and that is used for the channel time variation calculation for a first allocation structure type, as for example PUSC, containing randomly allocated pilots. The block 301 represents an uplink frame or a portion of an uplink frame, the frame containing five slots in time (15 OFDM symbols) and 210 tiles in frequency (840 sub-carriers). The white areas within the block represent tiles containing data and pilots from the specific user. The 4 pilots in each tile are used in the calculation. The frame 301 is divided into a set of blocks starting with the block 302 that are average, or more precisely where all the pilots within the block are average and stored in a vector 305.

This method allows obtaining the channel conditions for an allocation structure that randomly allocates the pilots within the frame in order to be more robust to a fast varying channel. The size of the block is adapted to the number of the carriers at the start of the system within the base station and may depend on the traffic of the mobile communication system. This method only takes place for a PUSC allocation structure or to any structure that randomly allocates the pilots, as for another type of allocation structures, for example AMC, a dedicated OFDM symbol (sounding) provides knowledge of the channel condition over all the subcarriers or the continuous pilot pattern in one burst makes it easier to obtain 2 channel condition vectors. These types of structures can only be used on slow varying channels, as the allocation structure of the sub-carriers may be adapted to the channel conditions and use the frequencies that are more robust to interference and noise within the channel.

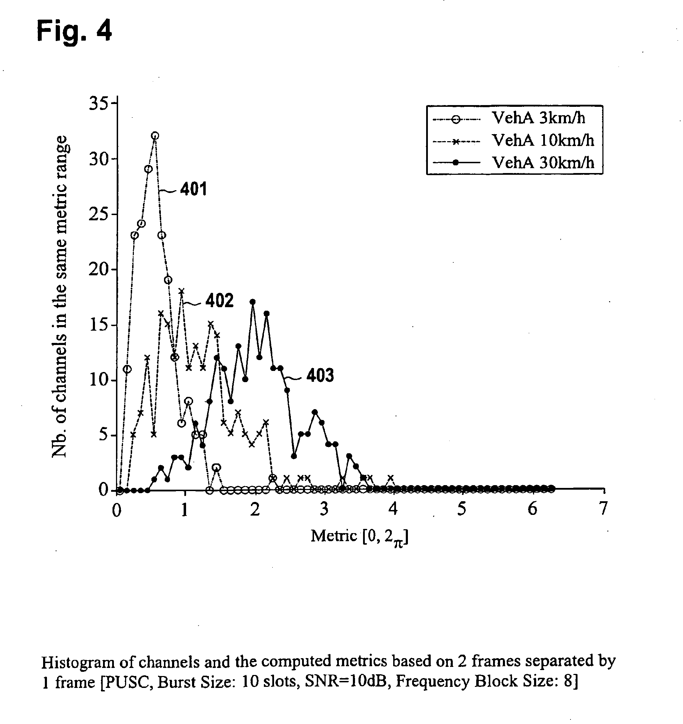

Fig. 4 shows a histogram of a metric that represents the result of the channel time variation calculation based on two vectors from two separated frames for the PUSC allocation structure type and the number of occurrences in the same metric range. The channel conditions include a burst size of 10 slots, a signal to noise ratio (SNR) of 10 dB and the frequency block size of 8. The histogram shows three different measurements for three different speeds of the mobile station modeled through an ITU vehicular A channel model with speeds of 3 km per hour (401), 10 km per hour (402) , and 30 km per hour (403). The International Telecommunication Union (ITU) has defined power delay profiles for different scenarios. These channels are often used to simulate and compare the performance of communication systems. Vehicular A is one of the channel models proposed by ITU. As it can be seen for the 3 km per hour channel, the metric or the result of the channel time variation is within the segment of 0 and 1 with an average value of 0,5; the second that corresponds to 10 km per hour is shifted and the result of the channel time variation is represented between the second 0 and 2 with an average of about 1,2.

Finally the third measurement corresponding to 30 km per hour is shifted to the right of the graph. The metric that represents the result of the channel time variation reaches up to 3,5 with an average around 2. This kind of information, whether from simulation or operation, may be used in order to decide what break point to be used for the switching of the allocation structure types. From the histogram a switching point of about 1.0 between PUSC and AMC may be used. In order to avoid a continuous switching between the allocation structures, the first allocation structure may use a break point of 0.8 and AMC may use a break point of 1.5. Alternatively, instead of a manual setting of the break points, this can be set in a dynamic way during the execution of the calculation. In this case, the base stations will collect information related to the quality of both allocation structure types for different channels and by trial and error define the break points. In this case, the impact of interference and burst modes need to be taken into account in the algorithm for these types of settings.

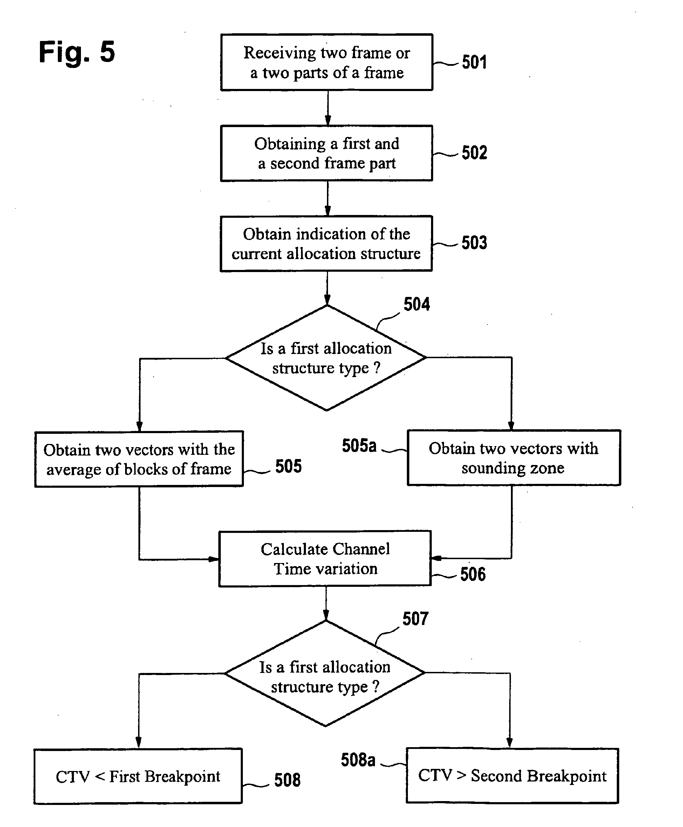

Fig. 5 shows a flowchart with the method according to an embodiment. The first step 501 receives a plurality of pilots in one or two frames from a mobile station. In the second step 502 the base station obtains a first frame part and a second frame part of the same frame or two different frames. In the third step 503, the base station obtains a notification indicating a current allocation structure type or it looks up for the notification in a memory. In the forth step 504 the base station decides what calculation algorithm to use according to the type of allocation structure. Then, on a fifth step 505 the base station calculates a first channel conditions vector by obtaining a first set of average of the first frame part and calculates a second channel conditions vector by obtaining a second set of average of the second frame part.

If the notification indicates a second allocation structure type, then the base station in a fifth step 505a obtains a first vector of the channel conditions from a first sounding zone of the first part of the frame and obtained second vector of the channel conditions from a second sounding zone of the second part of the same frame or of a second frame. On a sixth step 506 the base station calculates a channel time variation with an arithmetic operation between the first and the second channel condition vectors. This arithmetic operation may be for example the sample-by-sample difference or a correlation between the vectors. On an eight step 508 or 508a, the channel time variation value is compared with a first break point or with a second break point dependent on the current allocation structure type. If the notification 507 indicates a first allocation structure type and the channel time variation is smaller than a first break point 508t, then it switches to a second allocation structure type. Otherwise, if the notification 507 indicates a second allocation structure type and the channel time variation is bigger than the second break point 508a, then it switches to the first allocation structure type. If the channel time variation value is not smaller or bigger than the respective break points, the allocation structure type remains the same.

List of Reference Numerals

| 100 | Allocation structure decision |
|------|-------------------------------|
| 101 | Base station |
| 102 | Metric computation |
| 103 | First frame |
| 104 | Second frame |
| 105 | First breakpoint |
| 106 | Second breakpoint |
| 107 | Current allocation structure type |
| 108 | Mobile station |
| 205 | Process channel conditions |
| 206 | First evaluation function |
| 207 | Second evaluation function |
| 300 | Uplink frame |
| 302 | First block |
| 305 | First vector |
| 400 | Histogram |
| 401 | VehA 3 Km/h |
| 402 | VehA 10 Km/h |
| 403 | VecA 30 Km/h |
| 500 | Flow chart |
| 501 | First step |
| 502 | Second step |
| 503 | Third step |
| 504 | Forth step |
| 505 | Fifth step |
| 505a | Fifth step |
| 506 | Sixth step |
| 507 | Seventh step |

**Claims**

1. A method for deciding in an OFDMA digital cellular mobile communication system whether an adaptive modulation and coding (AMC) allocation structure or a partially used sub-carrier (PUSC) allocation structure shall be used, wherein PUSC stands for partial usage of subchannels and is an 802.16 OFDMA allocation scheme where in uplink the user burst is divided into so called tiles containing 12 samples, wherein these tiles are spread pseudo randomly over a big part of the time-frequency area defining the uplink frame, wherein AMC stands for adaptive modulation and coding and allows in 802.16 uplink allocation of data at a specific physical position over one or more contiguous subcarriers and the entire number of OFDM symbols, said communication system comprising a mobile station (108) coupled to a base station (101), the method comprising the steps of:

   - receiving a plurality of pilots in at least one frame (104) from a mobile station (108) by said base station (101);
   - obtaining (502) a first frame part and a second frame part of said frame by said base station (101);
   - obtaining (503) a notification indicating a current allocation structure of said plurality of pilots in said frame by said base station (101);
   - calculating (505) a first channel conditions vector (305) by said base station (101) by dividing the first frame part into a plurality of blocks and obtaining a first average of pilots of each block of said first frame part (302), calculating a second channel conditions vector by dividing the second frame part into a plurality of blocks and obtaining a second average of pilots of each block of said second frame part, if said notification indicates the PUSC allocation structure;
   - obtaining (505a) said first channel conditions vector from a first sounding zone of said first part of said frame and obtaining said second channel conditions vector from a second sounding zone of said second part of said frame by said base station (101), if said notification indicates the AMC allocation structure;

   the method being further **characterised in that** it comprises the steps of:

   - calculating (506) a channel time variation value with an arithmetic operation between said first and second said channel conditions vectors by said base station, wherein said arithmetic operation is a correlation between said first and second vector of said channel conditions;
   - switching to the AMC allocation structure, if said notification indicates the PUSC allocation structure and said channel time variation is smaller than a first breakpoint (508);
   - switching to the PUSC allocation structure, if said notification indicates the AMC allocation structure and said channel time variation is bigger than a second breakpoint (508a) by said base station.

2. The method as in claim 1, wherein said first and second frame parts belong to same frame.

3. The method as in claim 3, wherein if said notification indicates a second allocation structure , a first average is obtained on a first group of slots at the beginning of said frame and a second average is obtained on a second group of slot at end of said frame.

4. The method as in claim 1, wherein said first and second frame parts belong to a first and a second frame.

5. The method as in claim 5, wherein said first and second frame are randomly allocated frames.

6. A base station in an OFDMA digital cellular mobile communication system being operable to perform a method according to any one of the preceding claims.

7. A computer program product stored on a computer usable medium, comprising computer readable program means for causing a computer to perform a method according to any of the preceding claims 1 to 5 when said program is run on said computer.

**Patentansprüche**

1. Verfahren zum Entscheiden, in einem digitalen zellularen mobilen OFDMA-Kommunikationssystem, ob eine Zuweisungsstruktur vom Typ adaptive Modulation und Codierung (AMC) oder eine Zuweisungsstruktur vom Typ partiell genutzte Unterträger (PUSC) verwendet werden soll, wobei PUSC für die teilweise Verwendung von Unterkanälen steht und ein OFDMA-Zuweisungsschema gemäß 802.16 ist, in welchem der Benutzer-Burst in einer Uplink-Verbindung in sogenannte Kacheln mit 12 Abtastwerten aufgeteilt wird, wobei diese Kacheln pseudozufällig über einen großen Teil des Zeit-Frequenzbereichs, welcher den Uplink-Rahmen definiert, verteilt werden, wobei AMC für adaptive Modulation und Codierung steht und in einer 802.16-Uplink-Verbindung die Zuweisung von Daten in einer spezifischen physikalischen Position über einen oder mehrere benachbarte Unterträger und die gesamte Anzahl von OFDM-Symbolen ermöglicht, wobei das besagte Kommunikationssystem eine an eine Basisstation (101) gekoppelte Mobilstation (108) umfasst, wobei das Verfahren die folgenden Schritte umfasst:

- Empfangen einer Mehrzahl von Piloten in mindestens einem Rahmen (104) von einer Mobilstation (108) an der besagten Basisstation (101);
- Erhalten (502) eines ersten Rahmenteils und eines zweiten Rahmenteils des besagten Rahmens an der besagten Basisstation (101);
- Erhalten (503) einer Benachrichtigung, welche eine momentane Zuweisungsstruktur der besagten Mehrzahl von Piloten in dem besagten Rahmen angibt, an der besagten Basisstation (101);
- Berechnen (505), durch die besagte Basisstation (101), eines ersten Kanalzustandsvektors (305) durch Unterteilen des ersten Rahmenteils in eine Mehrzahl von Blöcken und Erhalten eines ersten Durchschnitts von Piloten eines jeden Blocks des besagten ersten Rahmenteils (302), Berechnen eines zweiten Kanalzustandsvektors durch Unterteilen des zweiten Rahmenteils in eine Mehrzahl von Blöcken und Erhalten eines zweiten Durchschnitts von Piloten eines jeden Blocks des besagten zweiten Rahmenteils, wenn die besagte Benachrichtigung die PUSC-Zuweisungsstruktur angibt;
- Erhalten (505a) des besagten ersten Kanalzustandsvektors von einem ersten Tonbereich des besagten ersten Teils des besagten Rahmens, und Erhalten des besagten zweiten Kanalzustandsvektors von einem zweiten Tonbereich des besagten zweiten Teils des besagten Rahmens an der besagten Basisstation (101), wenn die besagte Benachrichtigung die AMC-Zuweisungsstruktur angibt;

wobei das Verfahren weiterhin **dadurch gekennzeichnet ist, dass** es die folgenden Schritte umfasst:

- Berechnen (506) eines Kanal-Zeitabweichungswertes anhand einer arithmetischen Operation zwischen dem besagten ersten und dem besagten zweiten Kanalzustandsvektoren durch die besagte Basisstation, wobei die besagte arithmetische Operation eine Korrelation zwischen dem besagten ersten und dem besagten Vektor der besagten Kanalzustände ist;
- Umschalten auf die AMC-Zuweisungsstruktur, wenn die besagte Benachrichtigung die PUSC-Zuweisungsstruktur angibt und die besagte Kanal-Zeitabweichung kleiner als ein erster Breakpoint (508) ist;
- Umschalten auf die PUSC-Zuweisungsstruktur, wenn die besagte Benachrichtigung die AMC-Zuweisungsstruktur angibt und die besagte Kanal-Zeitabweichung größer als ein zweiter Breakpoint (508a) ist, durch die besagte Basisstation.

2. Verfahren nach Anspruch 1, wobei der besagte erste und der besagte zweite Rahmenteil demselben Rahmen angehören.

3. Verfahren nach Anspruch 3, wobei, wenn die besagte Benachrichtigung eine zweite Zuweisungsstruktur angibt, ein erster Durchschnitt auf einer ersten Gruppe von Schlitzen am Anfang des besagten Rahmens erhalten wird, und ein zweiter Durchschnitt auf einer zweiten Gruppe von Schlitzen am Ende des besagten Rahmens erhalten wird.

4. Verfahren nach Anspruch 1, wobei der besagte erste und der besagte zweite Rahmenteil einem ersten und einem zweiten Rahmen angehören.

5. Verfahren nach Anspruch 5, wobei der besagte erste und der besagte zweite Rahmen nach dem Zufallsverfahren zugewiesene Rahmen sind.

6. Basisstation in einem in einem digitalen zellularen mobilen OFDMA-Kommunikationssystem, welche betriebsfähig ist, um ein Verfahren nach einem beliebigen der vorstehenden Ansprüche durchzuführen.

7. Computerprogramm-Produkt, welches auf einem computerverwendbaren Medium gespeichert ist und computerlesbare Programm-Mittel umfasst, welche bewirken, dass ein Computer ein Verfahren nach einem beliebigen der vorstehenden Ansprüche 1 bis 5 durchführt, wenn das Programm auf dem besagten Computer läuft.

**Revendications**

1. Procédé pour décider dans un système de communication mobile cellulaire numérique OFDMA si une structure d'allocation de modulation et de codage adaptatifs (AMC) ou une structure d'allocation de sous-porteuse partiellement utilisée (PUSC) doit être utilisée, dans lequel PUSC signifie utilisation partielle des sous-canaux et est un schéma d'allocation 802.16 OFDMA où, en liaison montante, la rafale d'utilisateur est divisée en mosaïques contenant 12 échantillons, dans lequel ces mosaïques sont réparties de manière pseudo-aléatoire sur une grande partie de la zone temps-fréquence définissant la trame de liaison montante, dans lequel AMC signifie modulation et codage adaptatifs et permet dans la liaison montante 802.16, l'allocation de données à une position physique spécifique sur une ou plusieurs sous-porteuses contiguës et sur l'ensemble de symboles OFDM, ledit système de communication comprenant une station mobile (108) couplée à une station de base (101), le procédé comprenant les étapes suivantes :

   - recevoir une pluralité de pilotes dans au moins une trame (104) à partir d'une station mobile (108) par ladite station de base (101) ;
   - obtenir (502) une première partie de trame et une deuxième partie de trame de ladite trame par ladite station de base (101) ;
   - obtenir (503) une notification indiquant une structure d'allocation actuelle de ladite pluralité de pilotes dans ladite trame par ladite station de base (101) ;
   - calculer (505) un premier vecteur des conditions de canal (305) par ladite station de base (101) en divisant la première partie de trame en une pluralité de blocs et obtenir une première moyenne de pilotes de chaque bloc de ladite première partie de trame (302), calculer un deuxième vecteur des conditions de canal en divisant la deuxième partie de trame en une pluralité de blocs et obtenir une deuxième moyenne de pilotes de chaque bloc de ladite deuxième partie de trame, si ladite notification indique la structure d'allocation PUSC ;
   - obtenir (505a) ledit premier vecteur des conditions de canal à partir d'une première zone sonore de ladite première partie de ladite trame et obtenir ledit deuxième vecteur des conditions de canal à partir d'une deuxième zone sonore de ladite deuxième partie de ladite trame par ladite station de base (101), si ladite notification indique la structure d'allocation AMC ;

   le procédé étant en outre **caractérisé en ce qu'**il comprend les étapes suivantes :

   - calculer (506) une valeur de variation temporelle du canal avec une opération arithmétique entre lesdits premier et deuxième vecteurs des conditions de canal par ladite station de base, dans lequel ladite opération arithmétique est une corrélation entre lesdits premier et deuxième vecteurs desdites conditions de canal ;
   - commuter vers la structure d'allocation AMC, si ladite notification indique la structure d'allocation PUSC et si ladite variation temporelle du canal est inférieure à un premier point d'arrêt (508) ;
   - commuter vers la structure d'allocation PUSC, si ladite notification indique la structure d'allocation AMC et si ladite variation temporelle du canal est supérieure à un deuxième point d'arrêt (508a) par ladite station de base.

2. Procédé selon la revendication 1, dans lequel lesdites première et deuxième parties de trame appartiennent à la même trame.

3. Procédé selon la revendication 3, dans lequel si ladite notification indique une deuxième structure d'allocation, une première moyenne est obtenue dans un premier groupe de créneaux au début de ladite trame et une deuxième moyenne est obtenue dans un deuxième groupe de créneaux à la fin de ladite trame.

4. Procédé selon la revendication 1, dans lequel lesdites première et deuxième parties de trame appartiennent à une première et à une deuxième trames.

5. Procédé selon la revendication 5, dans lequel lesdites première et deuxième trames sont des trames allouées de manière aléatoire.

6. Station de base dans un système de communication mobile cellulaire numérique OFDMA permettant d'exécuter un procédé selon l'une quelconque des revendications précédentes.

7. Produit de programme informatique stocké sur un support lisible par ordinateur, comprenant des moyens de programme lisibles par un ordinateur pour provoquer l'exécution par un ordinateur d'un procédé selon l'une quelconque des revendications précédentes 1 à 5 lorsque ledit programme est exécuté sur ledit ordinateur.

Fig. 1

EP 2 093 919 B1

# Fig. 2

# Fig. 3

301

302

Frequency Block Size

Average all pilots in one block

20

40

60

80

100

120

140

160

180

200

Subcarriers

1    2    3    4    5

Tiles in frame

305

EP 2 093 919 B1

# Fig. 4

Histogram of channels and the computed metrics based on 2 frames separated by 1 frame [PUSC, Burst Size: 10 slots, SNR=10dB, Frequency Block Size: 8]

**Fig. 5**

Receiving two frame or
a two parts of a frame — 501

↓

Obtaining a first and
a second frame part — 502

↓

Obtain indication of the
current allocation structure — 503

↓

504

Is a first allocation
structure type ?

Obtain two vectors with the
average of blocks of frame — 505

505a — Obtain two vectors with
sounding zone

→ Calculate Channel
Time variation — 506

↓

507

Is a first allocation
structure type ?

CTV < First Breakpoint — 508

508a — CTV > Second Breakpoint

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2007149249 A